# DEMANDE DE BREVET EUROPEEN

(11) **EP 3 124 321 A1**
(43) Date de publication de la demande: **01.02.2017**
(21) Numéro de dépôt: 16178488.9
(22) Date de dépôt: 07.07.2016
(51) Int. Cl.: B60N 2/48

(54) **SYSTÈME DE MONTAGE D'UN APPUI-TÊTE DE SIÈGE DE VÉHICULE AUTOMOBILE**

(30) Priorité: 27.07.2015 FR 1557150
(71) Demandeur: Cera TSC, 75008 Paris (FR)
(72) Inventeur: HORNY, Frédéric, 51100 Reims (FR)
(74) Mandataire: Sayettat, Julien Christian

(57) **Abrégé**

L'invention concerne un système (1) comprenant : une première (2) et une deuxième tige tubulaire présentant généralement une section radiale circulaire, les extrémités supérieures desdites tiges étant reliées entre elles par une traverse (4) ; une première (5) et une deuxième gaine comprenant chacune un conduit (7) de coulissement desdites tiges, au moins ladite première gaine comprenant un tiroir (8) contraint en translation en étant pourvu d'un bord de crantage (10) ; un cran d'anti-extraction (11), ladite première tige étant emboutie en zone extrême inférieure (12), ladite zone inférieure étant reliée à une zone supérieure (13) non emboutie par une zone intermédiaire (14) de diamètre croissant progressivement, ladite zone inférieure étant emboitée dans un manchon métallique (15) de section radiale externe analogue à celle de ladite zone supérieure, de manière à définir ledit cran formé par la tranche (16) dudit manchon.

## Description

L'invention concerne un système de montage d'un appui-tête de siège de véhicule automobile et un appui-tête pour un tel système.

Il est connu de réaliser un système de montage d'un appui-tête de siège de véhicule automobile, ledit système comprenant :
- une première et une deuxième tige tubulaire métallique de montage dudit appui-tête sur un dossier dudit siège, lesdites tiges présentant généralement une section radiale circulaire, les extrémités supérieures desdites tiges étant reliées entre elles par une traverse,
- une première et une deuxième gaine respectives de réception desdites tiges en coulissement, lesdites gaines étant destinées à être montées en haut de dossier dudit siège, lesdites gaines comprenant chacune un conduit de coulissement, au moins ladite première gaine comprenant un tiroir monté mobile en translation radiale sur ledit conduit, ledit tiroir étant contraint en translation vers l'intérieur par un moyen de rappel élastique, ledit tiroir étant pourvu d'un bord de crantage,
- un cran d'anti-extraction disposé en bas de ladite première tige, de manière à pouvoir recevoir ledit bord de crantage sous l'effet dudit moyen de rappel et à empêcher une extraction de ladite première tige hors dudit conduit de ladite première gaine.

Une telle possibilité d'extraction de la première tige hors de son conduit peut notamment se produire en cas de décélération brutale du véhicule occasionnant un effort de projection de l'appui-tête vers le haut, ledit appui-tête pouvant alors devenir un projectile dangereux pour les occupants du véhicule.

En cas de choc violent de la tête du passager contre l'appui-tête, il peut se produire en outre, avec certaines configurations de traverses, une rotation de la première tige par rapport au bord de crantage, par « effet de manivelle », le bord de crantage risquant alors de ne pouvoir se positionner en regard du cran d'anti-extraction, ce qui peut entraîner le risque projection de l'appui-tête précité.

Par ailleurs, sous l'effet d'un choc violent de la tête du passager, on peut observer une rupture ou un pliage de la première tige au niveau du cran qui forme amorce de rupture ou de pliage.

En cas de rupture, la première tige peut devenir un danger pour les occupants du véhicule puisqu'elle peut présenter une arête coupante au niveau du cran.

Et, en cas de rupture ou de pliage, l'appui-tête ne remplit plus son rôle de maintien de la tête du passager pour assurer sa sécurité.

L'invention a pour but de pallier ces inconvénients.

A cet effet, et selon un premier aspect, l'invention propose un système de montage d'un appui-tête de siège de véhicule automobile, ledit système comprenant :
- une première et une deuxième tige tubulaire métallique de montage dudit appui-tête sur un dossier dudit siège, lesdites tiges présentant généralement une section radiale circulaire, les extrémités supérieures desdites tiges étant reliées entre elles par une traverse,
- une première et une deuxième gaine respectives de réception desdites tiges en coulissement, lesdites gaines étant destinées à être montées en haut de dossier dudit siège, lesdites gaines comprenant chacune un conduit de coulissement, au moins ladite première gaine comprenant un tiroir monté mobile en translation radiale sur ledit conduit, ledit tiroir étant contraint en translation vers l'intérieur par un moyen de rappel élastique, ledit tiroir étant pourvu d'un bord de crantage,
- un cran d'anti-extraction disposé en bas de ladite première tige, de manière à pouvoir recevoir ledit bord de crantage sous l'effet dudit moyen de rappel et à empêcher une extraction de ladite première tige hors dudit conduit de ladite première gaine,
ledit système présentant en outre les caractéristiques suivantes :
- ladite première tige est emboutie en zone extrême inférieure, de manière à présenter un diamètre amoindri,
- ladite zone inférieure est reliée à une zone supérieure non emboutie par une zone intermédiaire de diamètre croissant progressivement,
- ladite zone inférieure est emboitée dans un manchon métallique de section radiale externe analogue à celle de ladite zone supérieure, de manière à définir ledit cran formé par la tranche dudit manchon,
de sorte que ledit tiroir puisse coopérer avec ledit cran quelle que soit la position angulaire de ladite première tige par rapport à son axe.

Dans cette description, les termes de positionnement dans l'espace (supérieur, inférieur, haut, bas, vertical, au-dessus,...) sont pris en référence au système en place dans le véhicule.

Le terme « radial » est pris en référence à l'axe médian selon lequel s'étend la tige dans le conduit.

Avec l'agencement proposé, la possibilité de crantage du bord de crantage dans le cran d'anti-extraction subsiste en cas de rotation axiale de la première tige, ceci du fait que ledit cran s'étend selon toute la périphérie de ladite tige.

Il en résulte que l'appui-tête ne peut plus être projeté dans l'habitacle du véhicule du fait d'une rotation de la première tige.

En outre, le cran anti-extraction ainsi réalisé présente une très grande robustesse face au risque de rupture ou de pliage de la première tige au niveau dudit cran, ce qui permet à l'appui-tête d'assurer sa fonction de maintien de la tête du passager.

Selon un deuxième aspect, l'invention concerne un appui-tête d'un tel système.

D'autres particularités et avantages de l'invention apparaîtront dans la description qui suit, faite en référence aux figures jointes, dans lesquelles :
- la figure 1 est une vue en perspective d'un ensemble de deux tiges reliées par une traverse selon un mode de réalisation,

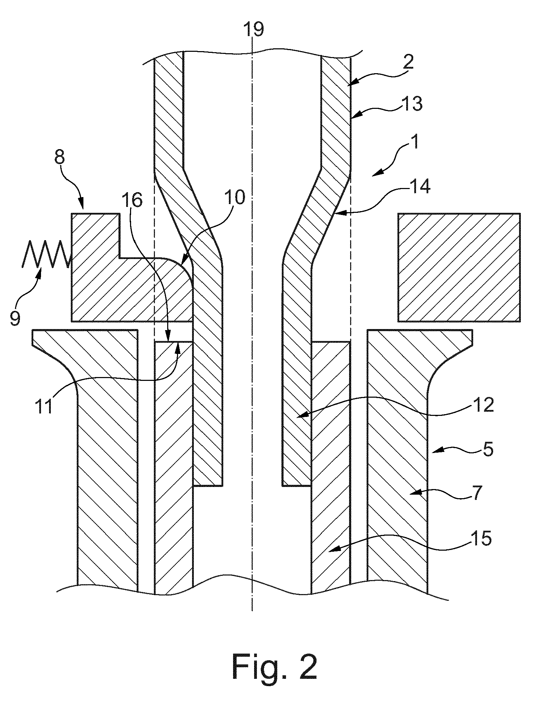

- la figure 2 est une vue schématique en coupe verticale partielle d'un système mettant en jeu l'ensemble de la figure 1, un bord de crantage étant en prise avec un cran d'anti-extraction.

En référence aux figures, on décrit un système 1 de montage d'un appui-tête de siège de véhicule automobile, ledit système comprenant :
- une première 2 et une deuxième 3 tige tubulaire métallique de montage dudit appui-tête sur un dossier dudit siège, lesdites tiges présentant généralement une section radiale circulaire, les extrémités supérieures desdites tiges étant reliées entre elles par une traverse 4,
- une première 5 et une deuxième gaine, non représentée, respectives de réception desdites tiges en coulissement, lesdites gaines étant destinées à être montées en haut de dossier dudit siège, lesdites gaines comprenant chacune un conduit 7 de coulissement, au moins ladite première gaine - et notamment les deux - comprenant un tiroir 8 monté mobile en translation radiale sur ledit conduit, ledit tiroir étant contraint en translation vers l'intérieur par un moyen de rappel élastique 9, ledit tiroir étant pourvu d'un bord de crantage 10,
- un cran d'anti-extraction 11 disposé en bas de ladite première tige, de manière à pouvoir recevoir ledit bord de crantage sous l'effet dudit moyen de rappel et à empêcher une extraction de ladite première tige hors dudit conduit de ladite première gaine,
ledit système présentant en outre les caractéristiques suivantes :
- ladite première tige est emboutie en zone extrême inférieure 12, de manière à présenter un diamètre amoindri,
- ladite zone inférieure est reliée à une zone supérieure 13 non emboutie par une zone intermédiaire 14 de diamètre croissant progressivement,
- ladite zone inférieure est emboitée dans un manchon métallique 15 de section radiale externe analogue à celle de ladite zone supérieure, de manière à définir ledit cran formé par la tranche 16 dudit manchon,
de sorte que ledit tiroir puisse coopérer avec ledit cran quelle que soit la position angulaire de ladite première tige par rapport à son axe 19.

Selon la réalisation représentée, le système 1 comprend en outre un moyen de liaison 17 prévu entre la zone inférieure 12 et le manchon 15, ledit moyen de liaison étant notamment sous forme de sertissage ou de soudure, ceci de manière à assurer une cohésion optimale entre ledit manchon et la première tige 2

Selon la réalisation représentée, la première tige 2 comprend en outre au moins un cran de réglage 18 en hauteur disposé au-dessus du cran d'anti-extraction 11, ledit cran de réglage étant agencé pour pouvoir recevoir le bord de crantage 10 sous l'effet du moyen de rappel 9.

En cas de rotation de la première tige 2 alors qu'elle était bloquée par le cran de réglage 18, le bord de crantage 10 se dégage dudit cran mais l'appui-tête ne peut être projeté dans l'habitacle du véhicule de par la présence du cran anti-extraction 11 dans lequel vient s'ancrer ledit bord.

Selon la réalisation représentée, la traverse 4 est distincte des tiges 2,3, ladite traverse étant emboitée sur lesdites tiges.

Selon une variante non représentée, les tiges 2,3 sont issues d'un tube métallique replié unique, la traverse 4 étant intégrée audit tube.

Selon une réalisation, le matériau constitutif des manchons 15 est différent de celui des tiges.

On peut ainsi adapter la qualité du métal utilisé en fonction dans exigences techniques requises.

Selon une réalisation, les tiges 2,3 sont pourvues d'un revêtement de surface, par exemple en chrome, les manchons 15, qui sont invisibles une fois l'appui-tête monté pouvant être pourvus d'un autre revêtement de surface, notamment de moindre qualité, ou du même revêtement de surface en moindre épaisseur, ou être simplement dépourvus de revêtement de surface.

On décrit enfin un appui-tête pour un tel système 1, ledit appui-tête comprenant :
- une première 2 et une deuxième 3 tige tubulaire métallique de montage sur un dossier dudit siège, lesdites tiges présentant généralement une section radiale circulaire, les extrémités supérieures desdites tiges étant reliées entre elles par une traverse 4,
- un cran d'anti-extraction 11 disposé en bas de ladite première tige,
ledit appui-tête présentant en outre les caractéristiques suivantes :
- ladite première tige est emboutie en zone extrême inférieure 12, de manière à présenter un diamètre amoindri,
- ladite zone inférieure est reliée à une zone supérieure 13 non emboutie par une zone intermédiaire 14 de diamètre croissant progressivement,
- ladite zone inférieure est emboitée dans un manchon métallique 15 de section radiale externe analogue à celle de ladite zone supérieure, de manière à définir ledit cran formé par la tranche 16 dudit manchon.

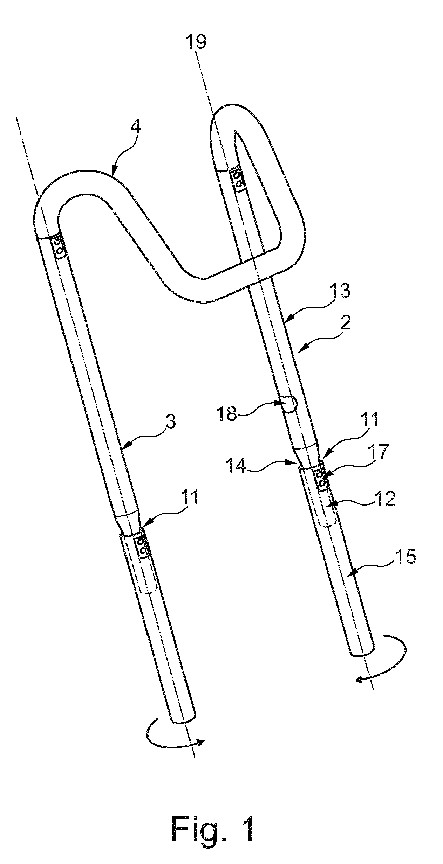

Selon la réalisation de la figure 1, les deux tiges 2,3 sont pourvues de manchons 15.

## Revendications

1. Système (1) de montage d'un appui-tête de siège de véhicule automobile, ledit système comprenant :
• une première (2) et une deuxième (3) tige tubulaire métallique de montage dudit appui-tête sur un dossier dudit siège, lesdites tiges présentant généralement une section radiale circulaire, les extrémités supérieures desdites tiges étant reliées entre elles par une traverse (4),
• une première (5) et une deuxième gaine respectives de réception desdites tiges en coulissement, lesdites gaines étant destinées à être montées en haut de dossier dudit siège, lesdites gaines comprenant chacune un conduit (7) de coulissement, au moins ladite première gaine comprenant un tiroir (8) monté mobile en translation radiale sur ledit conduit, ledit tiroir étant contraint en translation vers l'intérieur par un moyen de rappel élastique (9), ledit tiroir étant pourvu d'un bord de crantage (10),
• un cran d'anti-extraction (11) disposé en bas de ladite première tige, de manière à pouvoir recevoir ledit bord de crantage sous l'effet dudit moyen de rappel et à empêcher une extraction de ladite première tige hors dudit conduit de ladite première gaine,
ledit système étant **caractérisé en ce que** :
• ladite première tige est emboutie en zone extrême inférieure (12), de manière à présenter un diamètre amoindri,
• ladite zone inférieure est reliée à une zone supérieure (13) non emboutie par une zone intermédiaire (14) de diamètre croissant progressivement,
• ladite zone inférieure est emboitée dans un manchon métallique (15) de section radiale externe analogue à celle de ladite zone supérieure, de manière à définir ledit cran formé par la tranche (16) dudit manchon,
de sorte que ledit tiroir puisse coopérer avec ledit cran quelle que soit la position angulaire de ladite première tige par rapport à son axe (19).

2. Système selon la revendication 1, **caractérisé en ce qu'**il comprend en outre un moyen de liaison (17) prévu entre la zone inférieure (12) et le manchon (15), ledit moyen de liaison étant notamment sous forme de sertissage ou de soudure.

3. Système selon l'une des revendications 1 ou 2, **caractérisé en ce que** la première tige (2) comprend en outre au moins un cran de réglage (18) en hauteur disposé au-dessus du cran d'anti-extraction (11), ledit cran de réglage étant agencé pour pouvoir recevoir le bord de crantage (10) sous l'effet du moyen de rappel (9).

4. Système selon l'une quelconque des revendications 1 à 3, **caractérisé en ce que** la traverse (4) est distincte des tiges (2,3), ladite traverse étant emboitée sur lesdites tiges.

5. Système selon l'une quelconque des revendications 1 à 3, **caractérisé en ce que** les tiges (2,3) sont issues d'un tube métallique replié unique, la traverse (4) étant intégrée audit tube.

6. Système selon l'une quelconque des revendications 1 à 5, **caractérisé en ce que** le matériau constitutif des manchons (15) est différent de celui des tiges (2,3).

7. Système selon l'une quelconque des revendications 1 à 6, **caractérisé en ce que** les tiges (2,3) sont pourvues d'un revêtement de surface, les manchons (15) étant pourvus d'un autre revêtement de surface, ou du même revêtement de surface en moindre épaisseur, ou étant dépourvus de revêtement de surface.

8. Appui-tête pour un système selon l'une quelconque des revendications 1 à 7, ledit appui-tête comprenant :
• une première (2) et une deuxième (3) tige tubulaire métallique de montage sur un dossier dudit siège, lesdites tiges présentant généralement une section radiale circulaire, les extrémités supérieures desdites tiges étant reliées entre elles par une traverse (4),
• un cran d'anti-extraction (11) disposé en bas de ladite première tige, ledit appui-tête étant **caractérisé en ce que** :
• ladite première tige est emboutie en zone extrême inférieure (12), de manière à présenter un diamètre amoindri,
• ladite zone inférieure est reliée à une zone supérieure (13) non emboutie par une zone intermédiaire (14) de diamètre croissant progressivement,
• ladite zone inférieure est emboitée dans un manchon métallique (15) de section radiale externe analogue à celle de ladite zone supérieure, de manière à définir ledit cran formé par la tranche (16) dudit manchon.
